# EUROPÄISCHE PATENTSCHRIFT

(11) **EP 1 632 648 B1**
(45) Veröffentlichungstag und Bekanntmachung des Hinweises auf die Patenterteilung: **24.07.2013**
(21) Anmeldenummer: 05018547.9
(22) Anmeldetag: 26.08.2005
(51) Int. Cl.: F01D 9/02, F01D 5/14, F02C 7/20

(54) **Gasturbine mit Übergangskanal**
Gas turbine with transition duct
Turbine à gaz comprenant un conduit de transition

(30) Priorität: 03.09.2004 DE 102004042699
(43) Veröffentlichungstag der Anmeldung: 08.03.2006
(73) Patentinhaber: MTU Aero Engines GmbH, 80995 München (DE)
(72) Erfinder: Hoeger, Martin, 85435 Erding (DE)

(56) Entgegenhaltungen:
- DE-C1- 3 202 855
- GB-A- 2 267 736
- JP-A- 6 257 597
- US-A- 2 392 673
- US-A- 2 735 612
- US-A- 2 990 106
- US-A- 3 104 525
- US-A- 4 677 828

## Beschreibung

Die Erfindung betrifft eine Gasturbine, insbesondere ein Flugtriebwerk, gemäß dem Oberbegriff des Patentanspruchs 1.

Gasturbinen, wie Flugtriebwerke, verfügen in der Regel über mehrere Verdichter, mehrere Turbinen und eine Brennkammer. Bei den mehreren verdichtern handelt es sich in der Regel um einen Niederdruckverdichter bzw. einen Mitteldruckverdichter sowie um einen Hochdruckverdichter, bei den mehreren Turbinen um eine Hochdruckturbine sowie Niederdruckturbine. Die Gasturbine wird in axialer Richtung durchströmt, wobei der Niederdruckverdichter bzw. Mitteldruckverdichter stromaufwärts des Hochdruckverdichters und die Hochdruckturbine stromaufwärts der Niederdruckturbine positioniert ist. Vom Niederdruckverdichter bzw. Mitteldruckverdichter gelangt die Strömung in den Hochdruckverdichter durch einen Ubergangskanal zwischen diesen beiden Verdichtern. Ebenso ist zwischen der Hochdruckturbine und der Niederdruckturbine ein solcher Übergangskanal positioniert. Ein weiterer Ubergangskanal befindet sich im Turbinenaustrittsgehäuse stromabwärts einer Niederdruckturbine.

Aus dem Stand der Technik ist es bereits bekannt, in solchen Übergangskanälen in Umfangsrichtung des Übergangskanals voneinander beabstandete Stützrippen anzuordnen. Die Stützrippen dienen dabei der Durchführung von zum Beispiel Ölleitungen und Sensoren sowie der Aufnahme von Kräften, weshalb die Stützrippen relativ dick ausgeführt sind. Aus dem Stand der Technik sind Stützrippen bekannt, die zwar strömungsführend jedoch nicht strömungsumlenkend ausgebildet sind. Des weiteren sind Stützrippen bekannt, die über eine Saugseite sowie eine Druckseite verfügen und daher auch die Funktion einer Strömungsumlenkung übernehmen. Die Dicke der Stützrippen kann in etwa 30% der Sehnenlänge der Stützrippen betragen. Infolge der großen relativen Dicke solcher Stützrippen treten an den Strömungsaustrittskanten der Stützrippen große Keilwinkel auf, die hohe Strömungsverzögerungen insbesondere im Bereich einer den Übergangskanal radial innen begrenzenden Kanalwand und/oder einer den Übergangskanal radial außen begrenzenden Kanalwand verursachen. Hierdurch entstehen Sekundärströmungen, Strömungsablösungen und damit Strömungsverluste. Weiterhin wird eine Anströmung stromabwärts der Stützrippen positionierter Gasturbinenschaufeln gestört. Eine ähnliche Problematik tritz insbesondere auch bei gekühlten Hochdruckturbinenschaufeln mit relativ großem Keilwinkel an der Strömungsaustrittskante auf.

Aus den Dokumenten US 2 292 673 A, GB 2 257 736 A, US 3 104 525 A und US 2 735 612 A sind bei Gasturbinen Übergangskanäle mit Stützrippen bekannt, wobei mindestens eine Kanalwand im Bereich der Strömungsaustrittskanten der Stützrippen nach Innen in den Kanal hinein eingezogenist.

Hiervon ausgehend liegt der vorliegenden Erfindung das Problem zu Grunde, eine Gasturbine mit einem weiter verbesserten Übergangskanal zu schaffen.

Dieses Problem wird durch eine Gasturbine gemäß Patentanspruch 1 gelöst. Dabei sind/ist eine den Übergangskanal radial innen begrenzende Kanalwand und/oder eine den Übergangskanal radial außen begrenzende Kanalwand im Bereich der Strömungsaustrittskanten der Stützrippen nach innen in den Übergangskanal hinein eingezogen. Erfindungegemäß liegt der eingezogene Bereich zwischen 70% bis 12D% der Sehnenlänge der Stützrippen.

Hierdurch kann im Sinne der Erfindung der schädliche Dickeneinfluss von Stützrippen mit großem Keilwinkel an der Strömungsaustrittskante auf die Strömung reduziert werden. Ein weiterer Vorteil der Erfindung Liegt darin, dass eine verbesserte Anströmqualität für stromabwärts der Stützrippen positionierte Schaufelreihen erzielt werden kann. Weiterhin kann die Baulänge der Stützrippen sowie des Übergangskanals verkürzt werden. Findet die erfindungsgemäße Strömungsstruktur im Bereich von Turbinen Einsatz, so kann die Lärmentwicklung der Gasturbine reduziert werden, da sich eine geringere Interaktion zwischen den Stützrippen oder den Turbinenschaufeln und der stromabwärts positionierten Schaufelreihe einstellt.

Vorzugsweise sind/ist die innere Kanalwand und/oder die äußere Kanalwand zwischen zwei benachbarten Stützrippen im Bereich der Strömungsaustrittskanten derselben ausschließlich benachbart zu den Seitenwänden der Stützrippen nach innen in den Ubergangskanal hinein eingezogen, im Bereich der halben Teilung zwischen den zwei benachbarten Stützrippen sind/ist die innere Kanalwand und/oder die äußere Kanalwand hingegen nicht eingezogen.

Nach einer vorteilhaften Weiterbildung der Erfindung sind/ist die innere Kanalwand und/oder die äußere Kanalwand benachbart zu den Strömungseintrittskanten der Stützrippen nach außen aus dem Übergangskanal heraus ausgewölbt.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine stark schematisierte Darstellung einer erfindungsgemäßen Gasturbine mit einem Übergangskanal zwischen zwei Verdichterstufen;
- Fig. 2: einen Querschnitt durch die erfindungsgemäße Gasturbine der Fig. 1 im Bereich einer Nabe; und
- Fig. 3: einen Querschnitt durch die erfindungsgemäße Gasturbine der Fig. 1 und 2 in Schnittrichtung A-A.

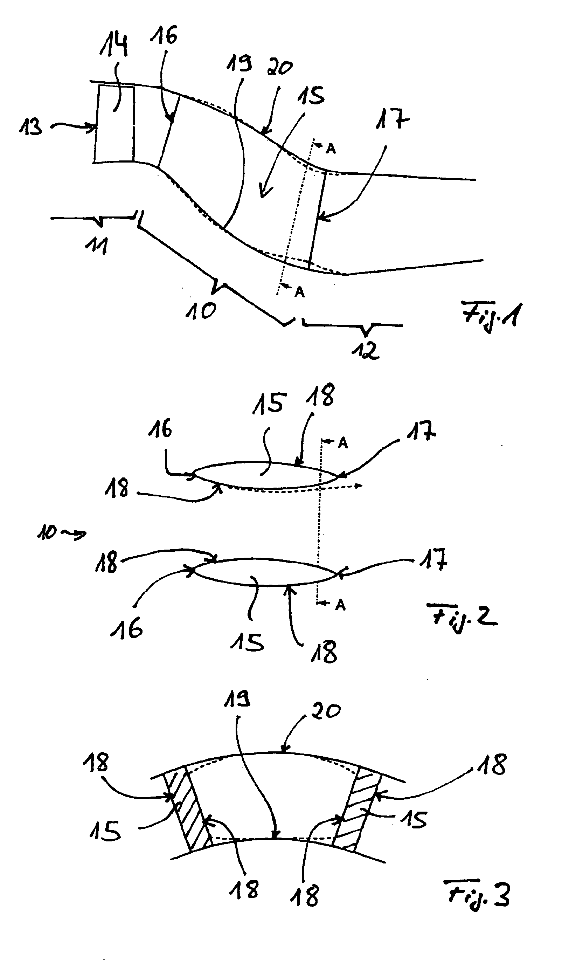

Fig. 1 bis 3 zeigen stark schematisiert ein bevorzugtes Ausführungsbeispiel einer erfindungsgemäßen Gasturbine mit einem Übergangskanal 10 zwischen einem Mitteldruckverdichter 11 bzw. einem Niederdruckverdichter und einem Hochdruckverdichter 12 eines Flugtriebwerks, wobei eine Gasströmung durch den Übergangskanal 10 vom Mitteldruckverdichter 11 bzw. Niederdruckverdichter in den Bereich des Hochdruckverdichters 12 geführt wird. Fig. 1 zeigt stark schematisiert, dass der Mitteldruckverdichter 11 im Bereich seiner in Strömungsrichtung gesehenen letzten Verdichterstufe vcn einem Laufschaufelkranz 13 abgeschlossen wird. Der Laufschaufelkranz 13 wird von mehreren in Umfangsrichtung veneinander beabstandeten Laufschaufeln 14 gebildet.

Wie insbesondere Fig. 2 entnommen werden kann, sind im Bereich des Übergangskanals 10 mehrere in Umfangsrichtung des Übergangskanals 10 voneinander beabstandete Stützrippen 15 angeordnet. Die Stützrippen 15 sind relativ dick sowie relativ lang ausgebildet und verfügen über ein kleines Höhenverhältnis. Die Szützrippen 15 verfügen im Bereich ihrer Strömungseintrittskanten 16 und ihrer Strömungsaustrittskanten 17 über relativ große Keilwinkel. Die Stützrippen 15 sind als strömungsführende jedoch als nicht-strömungsumlenkende Stützrippen ausgebildet, so dass deren Seitenwände 18 ausschließlich eine strömungsführende Funktion aufweisen.

Der Übergangskanal 10 wird in erster Linie von zwei Kanalwänden begrenzt, nämlich von einer radial innenliegenden Kanalwand 19 und einer radial au-Benliegenden Kanalwand 20. Die Kanalwände 19 und 20 können insbesondere Fig. 1 und 3 entnommen werden. Fig. 1 und 3 zeigen die Kanalwände 19 und 20 einerseits in durchgezogener Linieführung und andererseits in gestrichelter Linienführung. Bei der durchgezogenen Linienführung handelt es sich um die aus dem Stand der Technik bekannte Konturierung der Kanalwände 19 und 20, bei der gestrichelten Darstellung hingegen handelt es sich um die erfindungsgemäße Ausgestaltung der Kanalwände 19 und 20.

Im bevorzugten Ausführungsbeispiel der Fig. 1 bis 3 sind die den Übergangskanal 10 radial innen begrenzende Kanalwand 19 und die den Übergangskanal 10 radial außen begrenzende Kanalwand 20 im Bereich der Strömungsaustrittskanten 17 der Stützrippen 15 nach innen in den Übergangskanal 10 hinein eingezogen, und zwar wie Fig. 3 entnommen werden kann, ausschließlich benachbart zu den Seitenwänden 18 der Stützrippen 15. Im Bereich der halben Teilung zwischen zwei benachbarten Stützrippen 15 hingegen (siehe Fig. 3) sind die innere Kanalwand 19 sowie die äußere Kanalwand 20 nicht nach innen eingezogen, sondern verlaufen vielmehr im Bereich der aus dem Stand der Technik bekannten Konturierung. Es liegt demnach im Sinne der hier vorliegenden Erfindung, die Kanalwände 19 und 20 im Bereich der Strömungsaustrittskanten 17 der Stützrippen 15 ausschließlich benachbart zu den Seitenwänden 18 derselben nach innen in den Übergangskanal 10 hinein einzuziehen.

Wie Fig. 1 entnommen werden kann, sind erfindungsgemäß die innere Kanalwand 19 sowie die äußere Kanalwand 20 in einem Bereich zwischen 70 % und 120 %, insbesondere in einem Bereich zwischen 80 % und 110 %, der Sehnenlänge der Stützrippen 15 eingezogen. So kann Fig. 1 entnommen werden, dass der Bereich, in welchem die Kanalwände 19 und 20 in den Übergangskanal 10 hinein eingezogen sind, sich auch stromabwärts der Strömungsaustrittskante 17 der Stützrippen 15 erstreckt.

Wie Fig. 1 weiterhin entnommen werden kann, weicht im Sinne der hier vorliegenden Erfindung die Konturierung der Kanalwände 19 und 20 nicht nur im Bereich der Strömungsaustrittskanten 17 der Stützrippen 15 von der aus dem Stand der Technik bekannten Konturierung ab, sondern vielmehr auch im Bereich der Strömungseintrittskanten 16 derselben. So kann Fig. 1 entnommen werden, dass die innere Kanalwand 19 sowie die äußere Kanalwand 20 im Bereich der Strömungseintrittskanten 16 der Stützrippen 15 nach außen aus dem Übergangskanal 10 heraus ausgewölbt sind. Der Bereich, in dem die erfindungsgemäße Konturierung von innerer Kanalwand 19 sowie äußerer Kanalwand 20 gegenüber der aus dem Stand der Technik bekannten Konturierung derselben nach außen aus dem Übergangskanal 10 herausgewölbt ist, erstreckt sich bis in etwa 50 % der Sehnenlänge der Stützrippen 15.

Obwohl unter Bezugnahme auf Fig. 1 bis 3 die hier vorliegenden Erfindung für nicht-umlenkende Stützrippen 15 beschrieben wurde, sei darauf hingewiesen, dass die Erfindung auch bei umlenkenden Stützrippen zum Einsatz kommen kann.

Die erfindungsgemäße Lösung findet in Übergangskanälen Verwendung, vorzugsweise in einem Übergangskanal zwischen zwei Verdichtern oder auch zwischen zwei Turbinen. Die erfindungsgemäße Lösung kann in einem Übergangskanal zwischen einem Mitteldruckverdichter bzw. einem Niederdruckverdichter und einem Hochdruckverdichter positioniert sein. Des weiteren kann die erfindungsgemäße Lösung in einem Übergangskanal zwischen einer Hochdruckturbine und einer Niederdruckturbine angeordnet sein. Auch kann die erfindungsgemäße Lösung in einem Übergangskanal eines Turbinenaustrittsgehäuses stromabwärts einer Niederdruckturbine positioniert sein.

## Patentansprüche

1. Gasturbine, insbesondere Flugtriebwerk, mit einem Übergangskanal zwischen zwei Verdichtern oder mi einem Übergangskanal zwischen zwei Turbinen oder mit einem Übergangskanal eines Turbinenaustrittsgehäuses stromabwärts einer Niederdruckturbine, und mit in dem Übergangskanal positionierten, in Umfangsrichtung des Übergangskanals vcneinander beabstandeten Stützrippen, wobei eine den Übergangskanal radial innen begrenzende Kanalwand und/oder eine den Übergangskanal radial außen begrenzende Kanalwand im Bereich der Strömungsaustrittskanten der Stützrippen nach innen in den Übergangskanal hinein eingezogen sind/ist.
**dadurch gekennzeichnet,**
**dass** die innere Kanalwand (19) und/oder die äußere Kanalwand (20) in einem Bereich zwischen 70% bis 120% der Sehnenlänge der Stützrippen (15) eingezogen sind/ist.

2. Gasturbine nach Anspruch 1,
**dadurch gekennzeichnet,**
**dass** die innere Kanalwand (19) und/oder die äußere Kanalwand (20) zwischen zwei benachbarten Stützrippen (15) im Bereich der Strömungsaustrittskanten (17) derselben benachbart zu den Seitenwänden (18) der Stützrippen (15) nach innen in den Übergangskanal (10) hinein eingezogen sind/ist.

3. Gasturbine nach Anspruch 1 oder 2,
**dadurch gekennzeichnet,**
**dass** die innere Kanalwand (19) und/oder die äußere Kanalwand (20) zwischen zwei benachbarten Szützrippen (15) im Bereich der Strömungsaustrittskanten (17) derselben im Bereich der halben Teilung zwischen den zwei benachbarten Stützrippen (15) nicht eingezogen sind/ist.

4. Gasturbine nach einem der Ansprüche 1 bis 3,
**dadurch gekennzeichnet,**
**dass** die innere Kanalwand (19) und/oder die äußere Kanalwand (20) des Übergangskanals (10) benachbart zu den Strömungseintrittskanten (16) der Stützrippen (15) nach außen aus dem Übergangskanal (10) heraus ausgewölbt sind/ist.

5. Gasturbine nach Anspruch 4,
**dadurch gekennzeichnet,**
**dass** die innere Kanalwand (19) und/oder die äußere Kanalwand (20) in einem Bereich bis in etwa 50% der Sehnenlänge der Stützrippen (15) ausgewölbt sind/ist.

6. Gasturbine nach einem der Ansprüche 1 bis 5,
**dadurch gekennzeichnet,**
**dass** die Stützrippen (15) nicht-strömungsumlenkend, jedoch strömungsführend ausgebildet sind.

7. Gasturbine nach einem der Ansprüche 1 bis 6,
**dadurch gekennzeichnet,**
**dass** die Stützrippen (15) an den Strömungsaustrittskanten relativ große Keilwinkel aufweisen.

8. Gasturbine nach einem der Ansprüche 1 bis 7,
**dadurch gekennzeichnet,**
**dass** der Übergangskanal zwischen zwei Verdichtern, insbesondere zwischen einem Mitteldruckverdichter bzw. einem Niederdruckverdichter und einem Hochdruckverdichter, positioniert ist.

9. Gasturbine nach einem der Ansprüche 1 bis 7,
**dadurch gekennzeichnet,**
**dass** der Übergangskanal zwischen zwei Turbinen, insbesondere zwischen einer Hochdruckturbine und einer Niederdruckzurbine, positioniert ist.

10. Gasturbine nach einem der Ansprüche 1 bis 7,
**dadurch gekennzeichnet,**
**dass** der Übergangskanal eines Turbinenaustrittsgehäuses stromabwärts einer Niederdruckturbine positioniert ist.

## Claims

1. A gas turbine, in particular an aircraft engine, having a transition channel between two compressors or having a transition channel between two turbines or having a transition channel of a turbine outlet housing downstream of a low-pressure turbine, and having support ribs positioned in the transition channel and spaced apart from each other in the circumferential direction of the transition channel, wherein a channel wall radially delimiting the transition channel on the inside and/or a channel wall radially delimiting the transition channel on the outside are/is drawn inwards into the transition channel in the region of the flow outlet edges of the support ribs,
**characterised in that**
the inner channel wall (19) and/or the outer channel wall (20) are/is drawn in in a region between 70% and 120% of the chord length of the support ribs (15).

2. A gas turbine according to claim 1,
**characterised in that**
the inner channel wall (19) and/or the outer channel wall (20) are/is drawn inwards into the transition channel (10) between two adjacent support ribs (15) in the region of the flow outlet edges (17) of the same, adjacently to the side walls (18) of the support ribs (15).

3. A gas turbine according to claim 1 or 2,
**characterised in that**
the inner channel wall (19) and/or the outer channel wall (20) are/is not drawn in between two adjacent support ribs (15) in the region of the flow outlet edges (17) of the same, in the region of half the spacing between the two adjacent support ribs (15).

4. A gas turbine according to one of claims 1 to 3,
**characterised in that**
the inner channel wall (19) and/or the outer channel wall (20) of the transition channel (10) are/is arched outwards out of the transition channel (10) adjacently to the flow inlet edges (16) of the support ribs (15).

5. A gas turbine according to claim 4,
**characterised in that**
the inner channel wall (19) and/or the outer channel wall (20) are/is arched out in a region of up to approximately 50% of the chord length of the support ribs (15).

6. A gas turbine according to one of claims 1 to 5,
**characterised in that**
the support ribs (15) are formed so as not to deflect the flow, yet so as to guide the flow.

7. A gas turbine according to one of claims 1 to 6,
**characterised in that**
the support ribs (15) have comparatively large wedge angles at the flow outlet edges.

8. A gas turbine according to one of claims 1 to 7,
**characterised in that**
the transition channel is positioned between two compressors, in particular between a medium-pressure compressor or a low-pressure compressor and a high-pressure compressor.

9. A gas turbine according to one of claims 1 to 7,
**characterised in that**
the transition channel is positioned between two turbines, in particular between a high-pressure turbine and a low-pressure turbine.

10. A gas turbine according to one of claims 1 to 7,
**characterised in that**
the transition channel of a turbine outlet housing is positioned downstream of a low-pressure turbine.

## Revendications

1. Turbine à gaz, en particulier groupe motopropulseur d'avion, comprenant un conduit de transition entre deux compresseurs ou comprenant un conduit de transition entre deux turbines ou comprenant un conduit de transition d'un carter de sortie de turbine en aval d'une turbine basse pression, et comprenant des nervures de support positionnées dans le conduit de transition et espacées les unes des autres dans le sens périphérique du conduit de transition, une paroi de conduit, qui délimite radialement à l'intérieur le conduit de transition, et/ou une paroi de conduit, qui délimite radialement à l'extérieur le conduit de transition, étant introduites dans le conduit de transition vers l'intérieur dans la zone des arêtes de sortie d'écoulement des nervures de support,
**caractérisée en ce**
**que** la paroi intérieure de conduit (19) et/ou la paroi extérieure de conduit (20) sont introduites dans une zone correspondant à une portion comprise entre 70 % et 120 % de la longueur de corde des nervures de support (15).

2. Turbine à gaz selon la revendication 1,
**caractérisée en ce**
**que** la paroi intérieure de conduit (19) et/ou la paroi extérieure de conduit (20) sont introduites vers l'intérieur dans le conduit de transition (10) entre deux nervures de support (15) adjacentes dans la zone des arêtes de sortie d'écoulement (17) de ces dernières, à proximité des parois latérales (18) des nervures de support (15).

3. Turbine à gaz selon la revendication 1 ou 2,
**caractérisée en ce**
**que** la paroi intérieure de conduit (19) et/ou la paroi extérieure de conduit (20) ne sont pas introduites entre deux nervures de support (15) adjacentes, dans la zone des arêtes de sortie d'écoulement (17) de ces dernières, dans la zone de la moitié de l'écartement entre les deux nervures de support (15) adjacentes.

4. Turbine à gaz selon l'une quelconque des revendications 1 à 3,
**caractérisée en ce**
**que** la paroi intérieure de conduit (19) et/ou la paroi extérieure de conduit (20) du conduit de transition (10) sont bombées vers l'extérieur de manière à sortir du conduit de transition (10) à proximité des arêtes d'entrée d'écoulement (16) des nervures de support (15).

5. Turbine à gaz selon la revendication 4,
**caractérisée en ce**
**que** la paroi intérieure de conduit (19) et/ou la paroi extérieure de conduit (20) sont bombées dans une zone pouvant atteindre jusqu'à 50 % de la longueur de corde des nervures de support (15).

6. Turbine à gaz selon l'une quelconque des revendications 1 à 5,
**caractérisée en ce**
**que** les nervures de support (15) sont réalisées de manière à guider l'écoulement sans toutefois dévier ce dernier.

7. Turbine à gaz selon l'une quelconque des revendications 1 à 6,
**caractérisée en ce**
**que** les nervures de support (15) présentent au niveau des arêtes de sortie d'écoulement des angles de coupe relativement grands.

8. Turbine à gaz selon l'une quelconque des revendications 1 à 7,
**caractérisée en ce**
**que** le conduit de transition est positionné entre deux compresseurs, en particulier entre un compresseur moyenne pression ou un compresseur basse pression et un compresseur haute pression.

9. Turbine à gaz selon l'une quelconque des revendications 1 à 7,
**caractérisée en ce**
**que** le conduit de transition est positionné entre deux turbines, en particulier entre une turbine haute pression et une turbine basse pression.

10. Turbine à gaz selon l'une quelconque des revendications 1 à 7,
**caractérisée en ce**
**que** le conduit de transition d'un carter de sortie de turbine est positionné en aval d'une turbine basse pression.
